(19) Europäisches Patentamt
European Patent Office
Office européen des brevets

(11) Publication number: **0 454 231 A2**

(12) # EUROPEAN PATENT APPLICATION

(21) Application number: **91200928.9**

(51) Int. Cl.5: **C08F 4/70**, C08F 10/00

(22) Date of filing: **18.04.91**

(30) Priority: **20.04.90 US 513241**

(43) Date of publication of application: **30.10.91 Bulletin 91/44**

(84) Designated Contracting States: **DE FR GB IT NL**

(71) Applicant: **THE UNIVERSITY OF NORTH CAROLINA AT CHAPEL HILL**
**Office of Research Services, CB 4100, 300 Bynum Hall**
**Chapel Hill, NC 27599-4100(US)**

(72) Inventor: **Brookhart, Maurice S.**
**Route 7, Box 648-B**
**Chapel Hill, North Carolina 27514(US)**
Inventor: **Volpe, Anthony Frank, Jr.**
**3440 Sandy Creek Drive**
**Durham, North Carolina 27705(US)**

(74) Representative: **Barendregt, Drs. F. et al**
**EXTERPATENT B.V. P.O. Box 90649**
**NL-2509 LP 's-Gravenhage(NL)**

(54) **Late transition metal catalysts for olefin polymerization.**

(57) A polymerization catalyst and a method of polymerizing ethylene, other olefins, and alkynes with such catalyst are provided by the present invention. In particular, the polymerization catalyst comprises an active cationic portion of the formula

$LM\text{-}R^{+}$

wherein M is a Group VIII metal,
L is a ligand or ligands which stabilize the Group VIII metal, and
R is H, a hydrocarbyl radical or a substituted hydrocarbyl radical; and
a stabilizing anionic portion of the formula

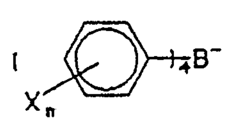

wherein X is F, Cl, a hydrocarbyl radical, a substituted hydrocarbyl radical, or combinations thereof, and
n is an integer from 1 to 5.
Polymerization is accomplished by contacting a monomer of ethylene, other olefin or alkyne with the catalyst.

EP 0 454 231 A2

The present invention relates to the polymerization of monomers of ethylene, other olefins and alkynes and mixtures thereof, and more particularly to a polymerization catalyst for the same.

## Backgroundof the Invention

It is well known that ethylene and l-olefins can be polymerized with a Ziegler-type catalyst derived from a transition metal halide and an aluminum alkyl. Ziegler-type catalysts, however, are rare when the transition metal is a late transition metal, such as a Group VIII metal. Also, aluminum alkyl is a pyrophoric liquid and hazardous to use.

In addition, in some early transition metal systems having a cationic species and an anionic species, there appears to be a reaction between the cationic species and the anionic species which deactivates the active cationic species, and more particularly the catalyst. Thus, attempts have been made to stabilize the active cationic species with a different anionic species. For example, it has been proposed in U.S. Patent Nos. 4,791,180 to Turner and 4,794,096 to Ewen to use excess amounts of alumoxane with various active cationic Ziegler-type catalysts. These catalysts, however, typically require an undesirable excess of the alumoxane (i.e., greater than about 1:1000 weight ratio of catalyst to alumoxane). Moreover, these catalysts are highly subject to poisoning with basic impurities.

It has also been proposed in EPO Patent Nos. 0 277 003 and 0 227 004, both to Turner, to use an anionic species comprising a plurality of boron atoms to stabilize active cationic species based on zirconium, titanium or hafnium. However, the types of monomers and solvents which may be used with cationic species based on early transition metals is limited because of the incompatibility of these metals with monomers and solvents bearing functional groups.

Thus, it would be highly desirable to provide a catalyst for the polymerization of ethylene, other olefins including those bearing functional groups, and alkynes which is stable at a wide variety of temperatures, resistant to impurities, not hazardous to make or use, and capable of being used with a wide variety of monomers and solvents including those with functional groups.

## Summaryof the Invention

To this end, a polymerization catalyst and a method of polymerizing ethylene, other olefins and alkynes with such catalyst are provided by the present invention. In particular, the polymerization catalyst comprises an active cationic portion of the formula

$LM\text{-}R^{+}$

wherein M is a Group VIII metal,
L is a ligand or ligands which stabilize the Group VIII metal, and
R is H, a hydrocarbyl radical or a substituted hydrocarbyl radical; and
a stabilizing anionic portion of the formula

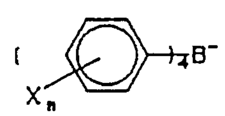

wherein X is F, Cl, a hydrocarbyl radical, a substituted hydrocarbyl radical, or combinations thereof, and
n is an integer from 1 to 5.

Polymerization is accomplished by contacting a monomer of ethylene, other olefins or alkynes with the catalyst.

An exemplary cationic portion has the formula

$Cp(L^{*})M\text{-}R^{+}$

wherein M is cobalt;
Cp is a substituted or an unsubstituted cyclopentadienyl radical;
L* is a neutral two-electron donor ligand; and
R is H, a hydrocarbyl radical or a substituted hydrocarbyl radical.

Another exemplary cationic portion has the formula

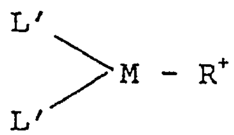

or

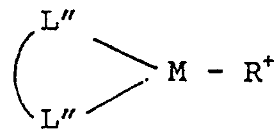

wherein M is nickel or palladium and L' is a two electron donor ligand or

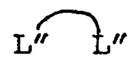

are chelating ligands wherein each L'' is a neutral two-electron donor ligand.

## Detailed Description of the Invention

The present invention is directed to a catalyst for the polymerization of ethylene, other olefins and alkynes. The polymerization catalyst comprises an active cationic portion and a stabilizing anionic portion.

The active cationic portion has the formula $LM-R^+$. M is a late transition metal, namely, a Group VIII metal selected from the group consisting of iron, cobalt, nickel, ruthenium, rhodium, palladium, osmium, iridium and platinum. Preferred are cobalt, nickel and palladium. L is a ligand or ligands which can stabilize the Group VIII metal. R is H, a hydrocarbyl radical or a substituted hydrocarbyl radical. The term "hydrocarbyl radical", as used herein for both the cationic and anionic portions, is intended to include alkyl, alkenyl, alkylaryl and arylalkyl radicals, and combinations thereof, and containing from 1 to 20 carbon atoms. Likewise, the term "substituted hydrocarbyl radicals" is intended to include the same group of radicals as above, substituted with groups such as halogens, particularly chlorine and fluorine, silyl groups, esters, and carbonyl groups. Exemplary hydrocarbyl radicals and substituted hydrocarbyl radicals are described, for example, in U.S. Patent No. 4,791,180 to Turner herein incorporated by reference.

A preferred active cationic portion has the formula

$Cp(L^*)M-R^+$

wherein M is cobalt; Cp is a substituted or an unsubstituted cyclopentadienyl radical and includes substituents such as the hydrocarbyl radicals or the substituted hydrocarbyl radicals described above, $L^*$ is a neutral two-electron donor ligand such as a phosphine, for example, $PR'_3$ wherein R' is a hydrocarbyl radical or a substituted hydrocarbyl radical, $P(OR'')_3$ wherein R'' is a hydrocarbyl radical or a substituted hydrocarbyl, or $PX'_3$ wherein X' is fluorine or chlorine; and R is H, a hydrocarbyl radical or a substituted hydrocarbyl radical as above.

Another preferred cationic portion has the formula

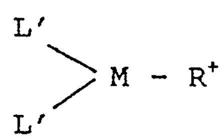

or

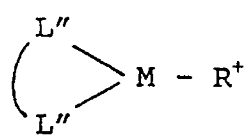

wherein M is nickel or palladium and L is a two electron donor ligand or

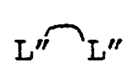

are chelating ligands wherein each L'' is a neutral two-electron donor ligand including but not limited to $(C_6H_5)_2PCH_2CH_2CH_2P(C_6H_5)_2$, $(CH_3)_2PCH_2CH_2P(CH_3)_2$, $(CH_3O)_2PCH_2CH_2P(OCH_3)_2$, $(C_2H_5)_2PCH_2CH_2P(C_2H_5)_2$, $(C_2F_5)_2PCH_2CH_2P(C_2F_5)_2$ and bipyridine, and R is H, a hydrocarbyl radical or a substituted hydrocarbyl radical as above.

The stabilizing anionic portion generally has the formula

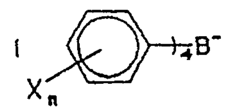

wherein X is F, Cl, a hydrocarbyl radical, a substituted hydrocarbyl radical, or combinations thereof, and n is an integer from 1 to 5. A preferred anionic portion is wherein the substituted hydrocarbyl radical is $CF_3$ and n is 2, e.g., tetrakis [3,5-bis(trifluoromethyl)phenyl] borate.

The catalyst is prepared in a variety of ways using techniques, and precursors of the cationic and anionic portions commonly known to those skilled in the art. One method is to add the cationic portion precursor in an inert solvent to a reaction vessel. The inert solvent is preferably a hydrocarbon which is a liquid at room temperature, for example, methylene chloride, pentane, isopentane, hexane, heptane, octane, nonane, cyclopentane, cyclohexane, benzene, toluene, ethylbenzene, diethylbenzene and the like. The anionic portion precursor is then added to the reaction vessel. Preferably, the anionic portion precursor is in its acid form. The acid form can be prepared by adding 1 equivalent of HCl to the sodium salt of the anionic portion precursor in diethyl ether. Typically, about 1 equivalent of the cationic portion precursor is added to about 1.3 to about 1.5 equivalents of the anionic portion precursor. Preferably, the reaction is completed under a dry, oxygen-free atmosphere with solvents dried under nitrogen by distillation from either Na/benzophenone or $P_2O_5$. It is recognized that the opposite order, namely addition of the anionic portion precursor first, followed by addition of the cationic portion precursor, or the simultaneous addition of both can also be used. Additionally the catalyst can be formed in the presence of the monomer to be polymerized.

The catalysts are used for the polymerization of monomers of ethylene, other olefins and alkynes. In operation, the catalyst is contacted with the monomer and successive migratory insertion reactions occur, namely

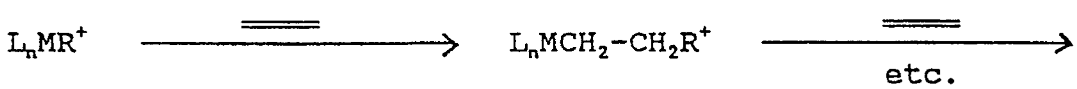


The cationic portion promotes the reaction and results in lower activation barriers for alkyl migrations.

The catalysts of the present invention are particularly useful in the polymerization of monomers of ethylene; $\alpha$-olefins such as propylene, 1-butene, 1-hexene and 1-octene; diolefins such as butadiene, 1,4 hexadiene, 1,5 hexadiene and 1,3 pentadiene; olefins having functional groups such as halides, esters, ethers, ketones, aldehydes, fluoroalkyls and aryls; and alkynes such as acetylene; and the like and mixtures thereof. It is to be recognized that polymerization includes not only the formation of long-chain polymers, but also copolymerization and oligomerization.

Polymerization can be conducted by a solution, slurry, or gas-phase process, at temperatures from about -20° C to about 150° C, under atmospheric, sub-atmospheric or super-atmospheric pressure and for about 1 minute to about 500 hours. The solution employed as the polymerization medium can be an alkane such as butane, pentane and hexane, a functionalized alkane such as methylene chloride, a cycloalkane such as cyclohexane, an ether such as diethyl ether, an aromatic hydrocarbon such as toluene, ethylbenzene and xylene or a sulfolane. Toluene and methylene chloride are preferred as the polymerization medium. Additionally, polymerization can be controlled by exposure to acid, hydrogen gas or using other techniques of control commonly known to those skilled in the art. Pigments, antioxidants, light stabilizers and other additives known to those skilled in the art may also be added to the polymer.

**EXAMPLES**

The following examples are provided in order to further illustrate various embodiments of the invention but should not be construed as limiting the scope thereof. Unless otherwise noted, all parts and percentages are by weight. All of the examples were completed under a dry, oxygen-free nitrogen atmosphere. All solvents were thoroughly dried under nitrogen by distillation from either Na/benzophenone

or $P_2O_5$. The preparation of the cationic portion precursors and the anionic portion precursors used in the examples are known to those skilled in the art. Additionally, throughout the examples, "Cp*" is intended to indicate a compound of the formula $(CH_3)_5C_5$, "Ph'" is intended to indicate a compound of the formula 3,5-$(CF_3)_2C_6H_3$, and "$\phi$" is intended to indicate a phenyl group.

**Example 1**

A polymerization catalyst was prepared in methylene chloride solution by combining 0.05g of Cp*CoP-$(OMe)_3(C_2H_4)$ with 0.18g of $H(Et_20)_2BPh'_4$ in 25ml of methylene chloride at 25° C. A dark red solution of the catalyst was formed.

**Example 2**

Ethylene was polymerized by combining 0.05g of Cp*CoP$(OMe)_3(C_2H_4)$ with 0.21g of $H(Et_20)_2BPh'_4$ in 25ml of methylene chloride in the presence of 1 atm of ethylene gas at 25° C. Polyethylene formation was observed in about 20 minutes. After 42 hours, the viscous polyethylene solution was treated with methanolic HCl and the polymer was filtered and washed with acetone. 5.5g of polyethylene was obtained having a $M_w$ of 45,300 and a polydispersity of 2.3.

**Example 3**

Ethylene was polymerized by combining 0.1g of Cp*CoP$(OMe)_3(C_2H_4)$ with 0.66g of $H(Et_20)_2BPh'_4H$ in 25ml of methylene chloride in the presence of 1 atm of ethylene gas at -10° C. A highly viscous solution was observed after 4 hours. After 20 hours, the viscous polyethylene solution was treated with dilute aqueous HCl and the polymer filtered and washed with acetone. 1.5g of polyethylene was obtained.

**Example 4**

A polymerization catalyst was prepared in toluene by combining 0.05g of Cp*CoP$(OMe)_3(C_2H_4)$ with 0.18g of $H(Et_20)_2BPh'_4$ in 25ml of toluene at 25° C. A suspension of dark red droplets of the catalyst was formed.

**Example 5**

Ethylene was polymerized by combining 0.05g of Cp*CoP$(OMe)_3(C_2H_4)$ with 0.21g of $H(Et_20)_2BPh'_4$ in 25ml of toluene in the presence of 1 atm of ethylene gas at 25° C. After 15 minutes, the solution was warm and after 20 minutes the solution appeared cloudy. 50ml of toluene was added at 6.5 and 14 hours to permit stirring to be continued when the solution became too viscous. After 45 hours, the solution was treated with methanolic HCl, and the polyethylene was filtered and washed with acetone. 7.5g of polyethylene was obtained having a M, of 72,589 and a polydispersity of 1.6.

**Example 6**

Ethylene was polymerized by combining 0.05g of Cp*CoP$(OMe)_3(C_2H_4)$ with 0.21g of $H(Et_20)_2BPh'_4$ in 80ml of toluene in the presence of 1 atm of ethylene gas at 25° C. After 6 hours, the solution was treated with methanolic HCl, and the polyethylene was filtered and washed with acetone. 3.6g of polyethylene was obtained having a $M_w$ of 46,200 and a polydispersity of 1.1.

**Example 7**

A polymerization catalyst was prepared in diethyl ether by combining 0.05g of Cp*CoP$(OMe)_3(C_2H_4)$ with 0.18g of $H(Et_20)_2BPh'_4$ in 25ml of diethyl ether at 25° C. A dark red solution of the catalyst was formed.

**Example 8**

Ethylene was polymerized by combining 0.05g of Cp*CoP$(OMe)_3(C_2H_4)$ with 0.21g of $H(Et_20)_2BPh'_4$ in 25ml of diethyl ether in the presence of 1 atm of ethylene gas at 25° C. After 24 hours, the solution was

treated with methanolic HCl, and the polyethylene was filtered and washed with acetone. 1.6g of polyethylene was obtained having a $M_w$ of 11,071.

**Example 9**

A polymerization catalyst was prepared in toluene by combining 0.05g of $Cp^*CoP(OMe)_3(C_3H_6)$ with 0.18g of $H(Et_20)_2BPh'_4$ in 25ml of toluene at 25° C. A dark red solution of the catalyst was formed.

**Example 10**

Ethylene was polymerized by combining 0.05g of $Cp^*CoP(OMe)_3(C_3H_6)$ with 0.21g of $H(Et_20)_2BPh'_4$ in 25ml of toluene in the presence of 1 atm of ethylene gas at 25° C. The solution became cloudy after 20 minutes and after 10 hours, 4g of polyethylene was isolated.

**Example 11**

Ethylene was polymerized by combining 0.036g of $(\phi_2PCH_2CH_2P\phi_2)Ni(CH_3)_2$ with 0.21g of $H(Et_20)_2BPh'_4$ in 25ml of methylene chloride in the presence of 1 atm of ethylene gas at 25° C. After 24 hours, the solution was analyzed and $C_6$ to $C_{30}$ oligomers were observed.

**Claims**

1. A method for polymerizing monomers of ethylene, other olefins and alkynes, the method comprising inducing polymerization by contacting the monomer with a polymerization catalyst comprising an active cationic portion of the formula

   $LM\text{-}R^+$

   wherein M is a Group VIII metal,
   L is a ligand or ligands which stabilize the Group VIII metal, and
   R is H, a hydrocarbyl radical or a substituted hydrocarbyl radical; and
   a stabilizing anionic portion of the formula

   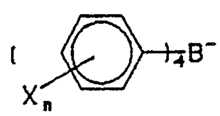

   wherein X is F, Cl, a hydrocarbyl radical, a substituted hydrocarbyl radical, or combinations thereof, and n is an integer from 1 to 5.

2. A method according to claim 1 whereby the Group VIII metal is selected from the group consisting of iron, cobalt, nickel, ruthenium, rhodium, palladium, osmium, iridium and platinum.

3. A method according to claim 1 whereby the substituted hydrocarbyl radical of the anionic portion is $CF_3$ and n is 2.

4. A method according to claim 1 whereby the monomer is contacted with a polymerization catalyst in a polymer medium selected from the group consisting of alkanes, functionalized alkanes, cycloalkanes, ethers, aromatic hydrocarbons, and sulfolane, and mixtures thereof.

5. A method according to claim 1 whereby the olefins are selected from the group consisting of α-olefins, diolefins and olefins having functional groups.

6. A method for polymerizing monomers of ethylene, other olefins and alkynes, the method comprising inducing polymerization by contacting the monomer with a polymerization catalyst comprising an active cationic portion of the formula

$Cp(L^*)M\text{-}R^+$

wherein M is cobalt;
Cp is a substituted or an unsubstituted cyclopentadienyl radical;
$L^*$ is a neutral two-electron donor ligand; and
R is H, hydrocarbyl radical or substituted hydrocarbyl radical; and
a stabilizing anionic portion of the formula

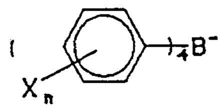

wherein X is F, Cl, a hydrocarbyl radical, substituted hydrocarbyl radical, or combinations thereof, and n is an integer from 1 to 5.

**7.** A method according to claim 6 whereby the substituted hydrocarbyl radical of the anionic portion is $CF_3$ and n is 2.

**8.** A method according to claim 6 whereby the monomer is contacted with a polymerization catalyst in a polymer medium selected from the group consisting of alkanes, functionalized alkanes, cycloalkanes, ethers, aromatic hydrocarbons, and sulfolane, and mixtures thereof.

**9.** A method according to claim 6 whereby the olefins are selected from the group consisting of α-olefins, diolefins and olefins having functional groups.

**10.** A method for polymerizing monomers of ethylene, other olefins and alkynes, the method comprising inducing polymerization by contacting the monomer with a polymerization catalyst comprising an active cationic portion of the formula

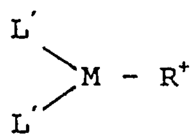

or

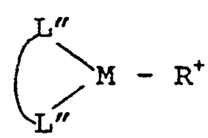

wherein M is nickel or palladium;
L' is a two electron donor ligand or

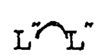

are chelating ligands wherein each L'' is a neutral two-electron donor ligand; and
R is H, hydrocarbyl radical or substituted hydrocarbyl radical; and
a stabilizing anionic portion of the formula

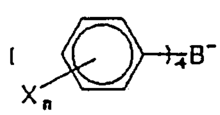

wherein X is F, Cl, a hydrocarbyl radical, substituted hydrocarbyl radical, or combinations thereof, and n is an integer from 1 to 5.

**11.** A method according to claim 10 whereby the substituted hydrocarbyl radical of the anionic portion is

$CF_3$ and n is 2.

**12.** A method according to claim 10 whereby the monomer is contacted with a polymerization catalyst in a polymer medium selected from the group consisting of alkanes, functionalized alkanes, cycloalkanes, ethers, aromatic hydrocarbons, and sulfolane, and mixtures thereof.

**13.** A method according to claim 10 whereby the other olefins are selected from the group consisting of α-olefins, diolefins and olefins having functional groups.

**14.** A polymerization catalyst comprising an active cationic portion of the formula

$LM\text{-}R^+$

wherein M is a Group VIII metal and, L is a ligand or ligands which stabilize the Group VIII metal, and R is H, hydrocarbyl radical or substituted hydrocarbyl radical; and
a stabilizing anionic portion of the formula

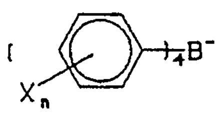

wherein X is F, Cl, hydrocarbyl radical, substituted hydrocarbyl radical, or combinations thereof, and n is an integer from 1 to 5.

**15.** A polymerization catalyst according to claim 14 wherein the Group VIII metal is selected from the group consisting of iron, cobalt, nickel, ruthenium, rhodium, palladium, osmium, iridium and platinum.

**16.** A polymerization catalyst according to claim 14 wherein the substituted hydrocarbyl radical of the anionic portion is $CF_3$ and n is 2.

**17.** A polymerization catalyst comprising an active cationic portion of the formula

$Cp(L^*)M\text{-}R^+$

wherein M is cobalt;
Cp is a substituted or an unsubstituted cyclopentadienyl radical;
$L^*$ is a neutral two-electron donor ligand; and
R is H, a hydrocarbyl radical or a substituted hydrocarbyl radical; and
a stabilizing anionic portion of the formula

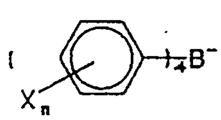

wherein X is F, Cl,a hydrocarbyl radical, substituted hydrocarbyl radical, or combinations thereof, and n is an integer from 1 to 5.

**18.** A polymerization catalyst according to claim 17 wherein the substituted hydrocarbyl radical of the anionic portion is $CF_3$ and n is 2.

**19.** A polymerization catalyst comprising an active cationic portion of the formula

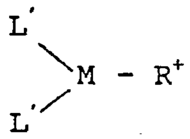

or

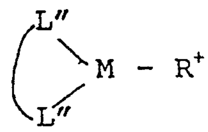

wherein M is nickel or palladium;
L' is a two electron donor ligand or

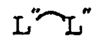

are chelating ligands wherein each L'' is a neutral two-electron donor ligand; and
R is H, hydrocarbyl radical or substituted hydrocarbyl radical; and
a stabilizing anionic portion of the formula

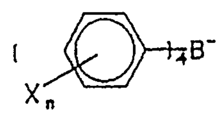

wherein X is F, Cl, a hydrocarbyl radical, substituted hydrocarbyl radical, or combinations thereof, and n is an integer from 1 to 5.

**20.** A polymerization catalyst according to claim 19 wherein the substituted hydrocarbyl radical of the anionic portion is $CF_3$ and n is 2.